# EUROPEAN PATENT APPLICATION

(11) **EP 2 578 832 A1**
(43) Date of publication of application: **10.04.2013**
(21) Application number: 11789632.4
(22) Date of filing: 19.05.2011
(51) Int. Cl.: F01N 3/08, E02F 9/00, B01D 53/94

(54) **OPERATION MACHINE**

(30) Priority: 31.05.2010 JP 2010123942
(71) Applicant: Caterpillar SARL, 1208 Geneva (CH)
(72) Inventor: TERAKAWA Takaya, Tokyo 158-8530 (JP); ONO Meiichi, Tokyo 158-8530 (JP); HIJIYA Toshimasa, Kobe-shi Hyogo 652-0863 (JP)
(74) Representative: Ablett, Graham Keith
(86) International application number: PCT/JP2011/061545
(87) International publication number: WO 2011/152223

(57) **Abstract**

A work machine that can be equipped with a liquid reducing agent tank having a sufficient tank capacity is provided. The base end portion of a boom of a work equipment is pivotally supported by a boom foot pin 12, which is disposed so as to bridge the space between a bracket 11 and another bracket of the upper structure 2 and can be horizontally moved so as to be removably passed through the aforementioned space. A storage box placement space 18 is provided at the place that is surrounded by the bracket 11 at the aforementioned one side, a side panel portion of a fuel tank 6, and an upper structure frame portion 17, which is provided along the peripheral portion of the upper structure 2. A storage box 5 is disposed in such a manner as to three-dimensionally cover the storage box placement space 18. A urea solution tank 21, which is made of synthetic resin and serves to contain an aqueous urea solution for reducing nitrogen oxides, is disposed in the storage box 5, at a location that is rearmost of the interior of the storage box 5 and adjacent to the fuel tank 6. A pail 24, a refueling pump 25, hoses 26, and a tool box 27 are also stored in the storage box 5, in front of the urea solution tank 21.

## Description

### TECHNICAL FIELD

The present invention relates to a work machine that is provided with a liquid reducing agent tank for containing a liquid reducing agent for reducing nitrogen oxides.

### BACKGROUND ART

A urea system is seen to have a potential as a system that will comply with next-generation emission regulations.

The emission regulations up to Tier 3 did not require an exhaust gas post-treatment device. From the Tier 4 Interim Regulations, however, an exhaust gas post-treatment device equipped with a DPF (Diesel Particulate Filter) and an SCR (Selective Catalytic Reduction) unit has become necessary. Moreover, a urea system (a urea SCR system) has also become mandatory.

The aforementioned urea system uses an aqueous urea solution as a liquid reducing agent for reducing nitrogen oxides. This is a system that generates ammonia gas by spraying the aqueous urea solution into a pipe between the DPF and the SCR unit, and causes within the SCR unit a chemical reaction of the ammonia gas with nitrogen oxides so as to decompose the ammonia gas and the nitrogen oxides into harmless nitrogen gas and water. Therefore, the system requires a urea solution tank for storing the aqueous urea solution.

Conventionally, when equipping a machine body with a urea solution tank of this type, it has been proposed to install the urea solution tank inside the engine room; near a hydraulic pump that is driven by the engine; near a valve for hydraulic components; inside a cab; near a hydraulic oil tank; or near a hydraulic swing motor (e. g. see PTL 1).

There are also cases where a component that is installed adjacent to the exhaust gas post-treatment device, such as a hydraulic oil tank or a counterweight, is equipped with a urea solution tank (e. g. see PTL 2), as well as cases where an Nox reducing device, such as a urea solution tank, is disposed in a space portion in a counterweight (e. g. see PTL 3).

### CITATION LIST

### Patent Literature

PTL 1: Japanese Laid-open Patent Publication No. 2003-20936 (p 3, and Fig. 2)
PTL 2: Japanese Laid-open Patent Publication No. 2009-79422 (p 9, and Figs. 9-10)
PTL 3: Japanese Laid-open Patent Publication No. 2009-162137 (p 7, and Figs. 2-6)

### SUMMARY OF INVENTION

### Technical Problem

Although the capacity of the urea solution tank depends on various factors, such as the interval of water supply or the quantity of the urea to be used, which depends on the grade of the machine body, the urea solution tank requires a considerable space with respect to the space occupied by the components of the work machine. Furthermore, depending on the self-feeding capacity of a urea solution feeding pump, there are also limitations in the distance from the urea solution tank to the SCR unit.

Therefore, when equipping the machine body of a work machine with a urea solution tank, it is necessary to place the urea solution tank while taking the abovementioned issues into consideration. However, it is not easy to install a urea solution tank having a sufficient tank capacity within a limited distance from the SCR unit.

For example, with the tank disposed as mentioned in PTL 1 or PTL 2, it is difficult to ensure a space that enables a urea solution tank having a sufficient tank capacity to be installed. On the other hand, the configuration described in PTL 3 requires formation of a space portion inside a counterweight and therefore makes it difficult to ensure a sufficient installation space.

As described above, conventional work machines present a problem in that a liquid reducing agent tank, such as a urea solution tank, may not necessarily be installed at an appropriate place.

In order to solve the above problem, an object of the invention is to provide a work machine that can easily be equipped with a liquid reducing agent tank having a sufficient tank capacity.

### Solution to Problem

Claim 1 of the present invention relates to a work machine includes a machine body; a work equipment disposed at the center of the front part of the machine body; a cab disposed at one of the widthwise sides of the work equipment; a storage box disposed at the other widthwise side of the work equipment; and a liquid reducing agent tank for containing a liquid reducing agent for reducing nitrogen oxides, the liquid reducing agent tank being disposed at the rear part of the interior of the storage box.

According to claim 2 of the present invention, the work equipment of the work machine according to claim 1 of the present invention is pivotally supported by a pin that can be moved horizontally so as to be removably inserted through a bracket provided at the machine body; and the liquid reducing agent tank is disposed below the area in which removal and insertion of the pin is carried out.

### Advantageous Effects of Invention

According to claim 1 of the present invention, the liquid reducing agent tank for containing a liquid reducing agent that serves to reduce nitrogen oxides is disposed at the rear part of the interior of the storage box, which is disposed opposite the cab with respect to the widthwise direction of the machine body, with the work equipment located between the storage box and the cab. Therefore, a liquid reducing agent tank that has a sufficient tank capacity can be easily installed without modifying the machine body.

According to claim 2 of the present invention, the liquid reducing agent tank is disposed below the area in which removal and insertion of the pin, by which the work equipment is pivotally supported at the bracket provided at the machine body, is carried out. Therefore, the work equipment can easily be removed from or attached to the machine body by operating, above the liquid reducing agent tank, removal or insertion of the pin without the need of removing the liquid reducing agent tank.

### BRIEF DESCRIPTION OF DRAWINGS

Fig. 1 is a perspective view of an installation location of a liquid reducing agent tank of a work machine according to an embodiment of the present invention.
Fig. 2 is a side view of the aforementioned tank installation location of the work machine.
Fig. 3 is a perspective view of the aforementioned work machine.

### DESCRIPTION OF EMBODIMENTS

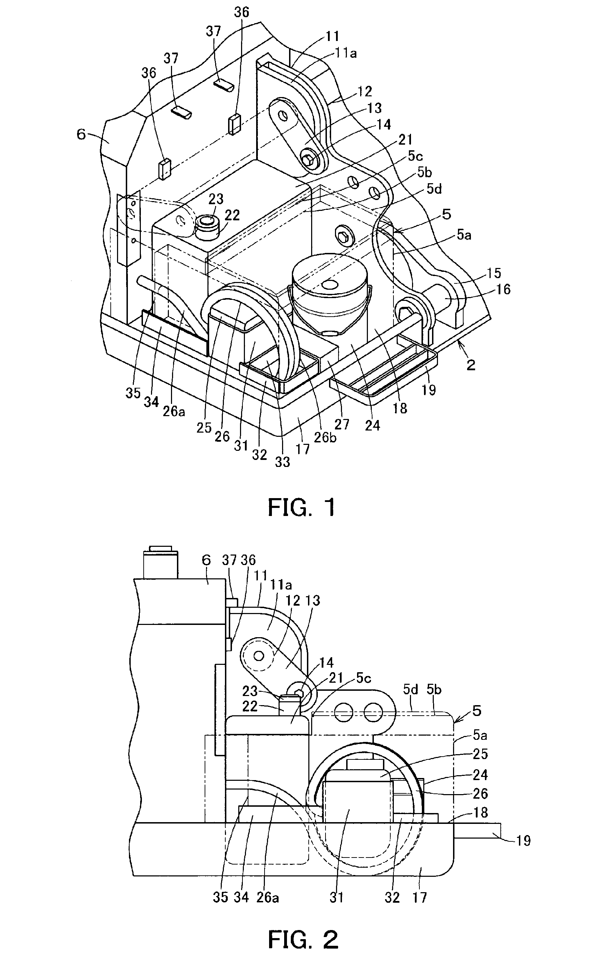

Next, the present invention is explained in detail hereunder, referring to an embodiment thereof shown in Figs. 1 to 3.

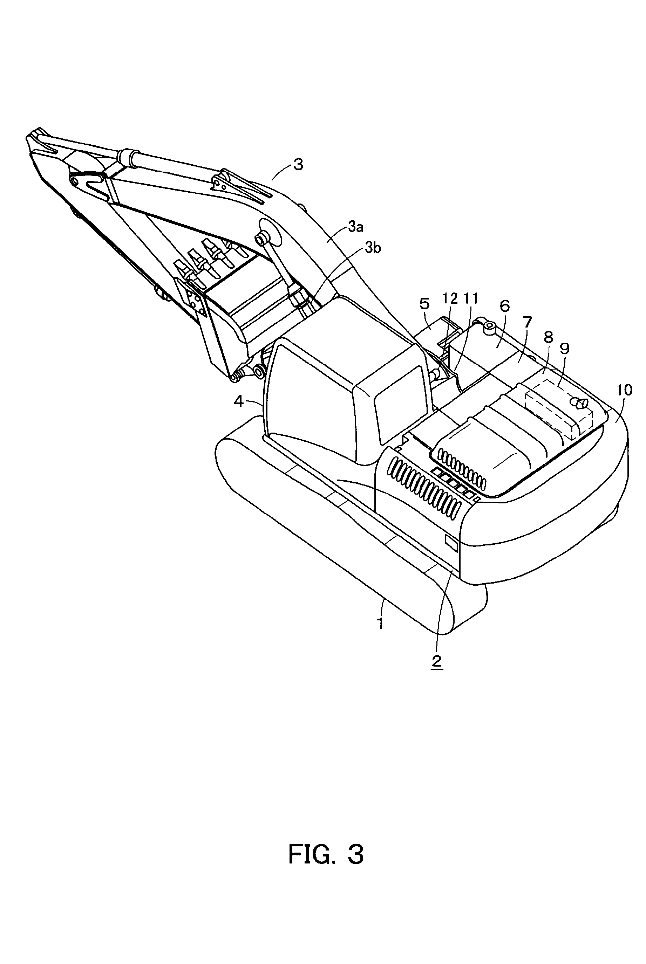

As shown in Fig. 3, a hydraulic excavator, which serves as a work machine, has a lower structure 1 and an upper structure 2. The upper structure 2, which serves as a machine body, i.e. the body of the work machine, is rotatably mounted on the lower structure 1 with a rotation bearing unit therebetween. A boom 3a and boom cylinders 3b of a work equipment 3 are disposed at the center of the front part of the upper structure 2. A cab 4, which forms an operator station, is disposed at one of the widthwise sides of the work equipment 3. A storage box 5 is disposed at the other widthwise side of the work equipment 3. A fuel tank 6 and a hydraulic oil tank 7 are disposed behind the storage box 5. Disposed at the rear part of the upper structure 2 are an engine (not shown), pumps (not shown) for the hydraulic circuit, and an exhaust gas post-treatment device 9. The engine is covered by an engine hood 8. The pumps for the hydraulic circuit are adapted to be driven by the engine. The exhaust gas post-treatment device 9 is provided with a DPF (Diesel Particulate Filter) and SCR (Selective Catalytic Reduction) unit. Furthermore, a counterweight 10 is disposed at the rear end of the upper structure 2.

As shown in Fig. 1, the upper structure 2 is provided with a bracket 11 and a reinforcing plate 11a, which are located at one side of the work equipment 3. The upper structure 2 is provided with another bracket and a reinforcing plate, which are disposed at a distance from the bracket 11 and the reinforcing plate 11a so as to form a space for attachment of the work equipment. These brackets and reinforcing plates are integrally welded to the upper structure 2. The base end portion of the boom 3a of the work equipment 3 is pivotally supported by a boom foot pin 12, which is a pin to bridge the space between the bracket 11 at one side and the other bracket at the opposite thereto and can be horizontally moved so as to be removably passed through the space.

A pin fixing plate 13 is integrally attached to an end of the boom foot pin 12. A fixing hole is formed at a distal end of the pin fixing plate 13 so that, by means of a nut and a bolt 14 screwed through the nut and the fixing hole, the pin fixing plate 13 is fixed to the bracket 11, which is provided at the machine body. By removing the bolt 14, the boom foot pin 12 can be moved horizontally so as to be removed from the bracket 11 as shown by two-dot chain line in Fig. 1 or inserted therethrough. A cylinder connecting pin 16 to which the base end portion of one of the boom cylinders 3b is connected is provided between the lower part of the bracket 11 and a small bracket 15.

As shown in Figs. 1 and 2, a storage box placement space 18 is provided at the place that is surrounded by the bracket 11 at the aforementioned one side, a side panel portion of the fuel tank 6, and an upper structure frame portion 17, which is provided along the peripheral portion of the upper structure 2. The aforementioned storage box 5 is disposed in such a manner as to three-dimensionally cover the storage box placement space 18.

The storage box 5 is a container box that also serves as a step and includes a side panel portion 5a extending along the upper structure frame portion 17, an opening frame member 5b attached to the upper end of the front part of the side panel portion 5a, and a cover plate 5d attached to the opening frame member 5b by means of a hinge 5c so that the cover plate 5d can be opened or closed. When maintenance operation is conducted on the machine body, the storage box 5 is used as a step for climbing up and down the machine body. A step 19 is provided on the front end of the upper structure frame portion 17 and serves as a step lower than the storage box 5.

A urea solution tank 21 as a liquid reducing agent tank is disposed in the storage box 5, at a location that is rearmost of the interior of the storage box 5 and adjacent to the fuel tank 6. The urea solution tank 21 is made of synthetic resin and serves to contain an aqueous urea solution that serves as a liquid reducing agent for reducing nitrogen oxides. The urea solution tank 21 has a urea solution inlet 22, which is closed by a cap 23.

A pail 24, a refueling pump 25, hoses 26, and a tool box 27, are stored in the storage box 5, in front of the urea solution tank 21.

The refueling pump 25 is disposed in a pump installation case 31. A hose insertion frame 32 is provided in front of the pump installation case 31 so as to form an insertion opening 33. A hose insertion space is provided below the refueling pump 25. Partition members 34,35 for ensuring a space for drawing out a hose is provided behind the pump installation case 31.

A hose 26a at the fuel discharge side is drawn out from and wound around the refueling pump 25, and introduced through the insertion opening 33 in the hose insertion frame 32 and then through the hose insertion space below the refueling pump 25 into the space formed by the partition members 34,35. The hose 26a is then passed through the partition member 35 and connected to the interior of the fuel tank 6 so as to provide fluid communication. A hose 26b at the fuel intake side of the refueling pump 25 is drawn out through the insertion opening 33 in the hose insertion frame 32 and then through the hose insertion space below the refueling pump 25 and wound around the refueling pump 25, in such a manner that the hose 26b can be wound back up when it is necessary.

The aforementioned opening frame member 5b and partition member 35 can also serve as positioning members for holding the urea solution tank 21 at a designated position.

The fuel tank 6 is provided, at the front end face thereof, with mounting base members 36,37 for removably attaching a cover member (not shown) that serves to cover the upper part of the urea solution tank 21. Depending on the model of the work machine, an upper step or the like may be attached to the cover member. Furthermore, it is desirable that the urea solution inlet 22 of the urea solution tank 21 be so formed as to enable the cap 23 to be attached to or removed from the urea solution inlet 22 without being obstructed by the cover member.

When the boom foot pin 12 is removed in order to remove or attach the work equipment 3, the aforementioned cover member, which is not shown in the drawings, is removed from the mounting base members 36, 37 as shown in Figs. 1 and 2. However, the urea solution tank 21 is disposed below the area in which removal and insertion of the boom foot pin 12 is carried out. Therefore, the structure of the invention described above not only enables the boom foot pin 12 to be removed while the liquid reducing agent tank 21 remains in the storage box 5 but also ensures effective use of the space.

To be more specific the urea solution tank 21, which has a limited height so that it will not obstruct removal of the boom foot pin 12, is installed by effectively using the relatively large space that has not been used effectively according to conventional structures due to its location being at the rear part of the interior of the storage box 5. Therefore, the present invention described above is capable of ensuring an installation space for the urea solution tank 21, which requires a sufficient tank capacity.

Next, functions and effects of the embodiment described above are explained.

The urea solution tank 21 is disposed at the rear part of the interior of the storage box 5. By means of a urea solution pump (not shown), aqueous urea solution that is stored in the urea solution tank 21 is sprayed into a pipe between the DPF and the SCR unit of the exhaust gas post-treatment device 9 so as to generate ammonia gas. Then, a chemical reaction is caused in the SCR unit between the ammonia gas and nitrogen oxides so as to decompose the ammonia gas and the nitrogen oxides into harmless nitrogen gas and water.

The pail 24, the refueling pump 25, the hoses 26, the tool box 27, and the like are stored relatively towards the front part of the interior of the storage box 5, and when it is necessary, the cover plate 5d of the storage box 5 can be opened to remove or return the pail 24, the hoses 26, the tool box 27, or the like.

When removing the work equipment 3 from the upper structure 2, the boom foot pin 12 is removed by following steps of removing the aforementioned cover member, which is not shown; removing the bolt 14 of the pin fixing plate 13 for fixing the boom foot pin 12; and removing the boom foot pin 12 from the bracket 11 while rotating the boom foot pin 12 to a height shown in Fig. 1 so as to prevent the pin fixing plate 13 from interfering with the urea solution inlet 22 of the urea solution tank 21 or the cap 23.

The urea solution tank 21 for containing the aqueous urea solution that serves to reduce nitrogen oxides is disposed at the rear part of the interior of the storage box 5, which is disposed opposite the cab 4 with respect to the widthwise direction of the machine body, with the work equipment 3 located between the storage box 5 and the cab 4. Therefore, a urea solution tank 21 that has a sufficient tank capacity can be easily installed without changing the structure of the upper structure 2.

The urea solution tank 21 is disposed below the area in which removal and insertion of the boom foot pin 12, by which the work equipment 3 is pivotally supported at the bracket 11 provided at the upper structure 2, is carried out. Therefore, the work equipment 3 can easily be removed from or attached to the upper structure 2 by operating, above the urea solution tank 21, removal or insertion of the boom foot pin 12 without the need of removing the urea solution tank 21.

As the size of the storage box 5 is increased along with an increase in the size of the machine body, a urea solution tank 21 that has a tank capacity sufficient for the machine body can be installed in the storage box 5. In addition, as the storage box 5 is installed within a limited distance from the SCR unit of the exhaust gas post-treatment device 9, the urea solution tank 21 can be installed in such a manner as to fulfill functionality requirements of the SCR system. Furthermore, by removing the aforementioned cover member (not shown), maintenance of the urea solution tank 21 can easily be performed.

### INDUSTRIAL APPLICABILITY

The present invention may be applied in such industries that manufacture a work machine equipped with a liquid reducing agent tank 21.

### REFERENCE SIGNS LIST

- 2: upper structure as a machine body
- 3: work equipment
- 4: cab
- 5: storage box
- 11: bracket
- 12: boom foot pin as a pin
- 21: urea solution tank as a liquid reducing agent tank

## Claims

1. A work machine comprising:
a machine body;
a work equipment disposed at the center of the front part of the machine body;
a cab disposed at one of the widthwise sides of the work equipment;
a storage box disposed at the other widthwise side of the work equipment; and
a liquid reducing agent tank for containing a liquid reducing agent for reducing nitrogen oxides, the liquid reducing agent tank being disposed at the rear part of the interior of the storage box.

2. A work machine as claimed in claim 1, wherein:
the work equipment is pivotally supported by a pin that can be moved horizontally so as to be removably inserted through a bracket provided at the machine body; and
the liquid reducing agent tank is disposed below the area in which removal and insertion of the pin is carried out.
